# EUROPÄISCHE PATENTSCHRIFT

(11) **EP 1 512 710 B1**
(45) Veröffentlichungstag und Bekanntmachung des Hinweises auf die Patenterteilung: **16.01.2008**
(21) Anmeldenummer: 04102825.9
(22) Anmeldetag: 21.06.2004
(51) Int. Cl.: C08G 69/04, C08G 69/16, C08G 69/18, C08K 5/05, C08K 5/09, C08K 5/092, C08K 5/138, C08G 69/28

(54) **Verfahren zur Erhöhung des Molkulargewichts bei Polyamiden**
Method of increasing the molecular weight of a polyamide
Procédé pour augmenter le poids moléculaire d'un polyamide

(30) Priorität: 16.08.2003 DE 10337707
(43) Veröffentlichungstag der Anmeldung: 09.03.2005
(73) Patentinhaber: Evonik Degussa GmbH, 40474 Düsseldorf (DE)
(72) Erfinder: Wursche, Roland, Dr., 48249 Dülmen (DE); Dowe, Andreas, 46325 Borken (DE); Baumann, Franz-Erich, Dr., 48249 Dülmen (DE); Bartz, Wilfried, Dr., 45770 Marl (DE); Himmelmann, Martin, 45721 Haltern am See (DE); Göring, Rainer, 46325 Borken (DE)

(56) Entgegenhaltungen:
- WO-A-00/66650

## Beschreibung

Die vorliegende Erfindung betrifft ein Verfahren zur Aufkondensierung von Polyamiden, die herstellungsbedingt einen phosphorhaltigen Katalysator enthalten.

Polyamide sind Makromoleküle, die in der Hauptkette die Gruppierung -CO-NH- enthalten. Man erhält sie entweder aus zwei verschiedenen bifunktionellen Monomerbausteinen, von denen jeder zwei gleiche reaktive Gruppen, z. B. -NH₂ bzw. -COOH, enthält, oder aus einheitlichen bifunktionellen Bausteinen, die je eine Amino- und Carboxylgruppe tragen oder ausbilden können. Polyamide werden beispielsweise durch Polykondensationsreaktionen von Diaminen mit Dicarbonsäuren oder von Aminocarbonsäuren bzw. durch ringöffnende Polymerisation von Lactamen hergestellt.

Für eine Reihe von Anwendungen ist die Bereitstellung von Polyamidformmassen notwendig, die sich durch eine hohe Schmelzesteifigkeit auszeichnen. Die Gründe hierfür liegen beispielsweise in der zwingenden Anwendung spezifischer Verarbeitungsverfahren. Dieser Anforderung kann begegnet werden, indem Polyamide mit hohem Molekulargewicht und infolgedessen hoher Viskosität eingesetzt werden. Derartige Polyamide werden nach einem zweistufigen Verfahren erzeugt. Dabei erfolgt zunächst die Herstellung eines vergleichsweise niederviskosen Präpolymers in einem Druckreaktor, wie beispielsweise im Kunststoff-Handbuch, Band 3/4 Technische Thermoplaste, Polyamide; Hrsg. Becker, Braun; Carl Hanser Verlag, 1998, beschrieben. Als Katalysator wird vorteilhafterweise eine protonensaure phosphorhaltige Verbindung wie z. B. H₃PO₂, H₃PO₃ oder H₃PO₄ eingesetzt. Weitere Beispiele für als Katalysatoren geeignete Verbindungen sind Organophosphonsäuren oder Organophosphinsäuren oder deren Vorstufen. Neben einer verbesserten Laurinlactamspaltung bei niedrigen Temperaturen, was in der Folge auch einen geringeren Restlactamgehalt bedeutet, wird durch die Präsenz dieses Katalysators eine Farbverbesserung der entsprechenden Polykondensate bewirkt; die Poly-kondensationsreaktion wird insgesamt beschleunigt. Die Wirkungen der katalysierenden Verbindungen erstrecken sich natürlich auch auf Polyamide, die kein Laurinlactam, sondern andere Monomere enthalten. Das Vorprodukt, das auf diese Weise in der ersten Reaktionsstufe erhalten wird, wird anschließend durch Reaktion der verbliebenen Endgruppen auf den erforderlichen Endwert des Molekulargewichts angehoben, beispielsweise durch Festphasennachkondensation oder alternativ in der Schmelze, wobei dies in einer Apparatur geschehen kann, die sich direkt an die Apparatur der ersten Reaktionsstufe anschließt. Dem erhaltenen hochmolekularen Polyamid werden danach diverse typische Additive zugegeben, wie beispielsweise Leitfähigkeitsadditive, Stabilisatoren, Verarbeitungshilfsmittel, Farbmittel etc., was in der Regel unter Nutzung dem Fachmann bekannter Compoundiertechnik durchgeführt wird. Die so erhaltene Formmasse findet dann dort Anwendung, wo eine erhöhte Schmelzesteifigkeit erforderlich ist, unter anderem in der Extrusion oder Coextrusion beispielsweise von Rohren, beim Blasformen, Saugblasformen, 3-D-Blasformen oder beim Thermoformen, beispielsweise von Folien. Nachteilig ist allerdings, dass die Anhebung des Molekulargewichts auf das erforderliche Niveau und die Einbringung der notwendigen weiteren Bestandteile der Formmasse in getrennten, aufeinander folgenden Schritten durchgeführt werden, wobei hier zusätzliche Verfahrenskosten resultieren.

Eine höhere Effizienz des Prozesses würde realisiert, wenn es gelänge, die beiden erwähnten Schritte zu vereinigen, so dass in einer einzigen Verfahrensstufe das Molekulargewicht angehoben und die gewünschten Zusatzstoffe eingebracht würden. Weiterhin wird zur Kompensation eines bei der Verarbeitung im Schmelzezustand aufgrund der Einwirkung von Temperatur und Scherung oftmals auftretenden Molekulargewichtsabbaus eine Molmassenreserve gewünscht. Für Extrusion bzw. Blasformen werden hochmolekulare, schmelzesteife Werkstoffe benötigt. In Hinsicht auf die Anwendungsbereiche für schmelzesteife Formmassen ist zu berücksichtigen, dass schmelzesteife Formmassen nicht nur zu einschichtigen Strukturen verarbeitet werden können, sondern auch zu Mehrschichtstrukturen zusammen mit Formmassen geringer Schmelzesteifigkeit, wobei deren mangelnde Schmelzesteifigkeit durch die hochviskose schmelzesteifere Formmasse kompensiert wird. Dies führt dazu, dass der gesamte Verbund in der oben genannten Weise verarbeitbar wird. Auf diese Weise lassen sich vorteilhaft Formkörper aus mehrschichtigen Verbunden herstellen, die spezielle Funktionsschichten enthalten, und die auf andere Weise nicht zugänglich wären.

Die WO 94/19394 beschreibt ebenfalls den Zusatz von sauren Verbindungen des Phosphors zur Polykondensationsmischung bei der Herstellung von Polyamiden, um die Farbe zu verbessern. Die katalytische Wirkung wird dort durch gleichzeitigen Zusatz einer Base zurückgedrängt, um einen unkontrollierten Molekulargewichtsaufbau bei der Verarbeitung zu verhindern.

In der WO 00/66650 wird die Verwendung von Verbindungen mit mindestens zwei Carbonateinheiten zur Aufkondensierung von Polyamiden beschrieben, wobei die Eigenschaften sicher und stabil eingestellt werden können und die Möglichkeit eröffnet wird, eine Mehrfachverarbeitung des aufkondensierten Materials vorzunehmen, ohne dass es zu Gelbildung oder Inhomogenitäten kommt. Ein auf diesem Prinzip beruhendes Additiv zur Molekulargewichtseinstellung bei Polyamiden wird von der Fa. Brüggemann KG unter der Bezeichnung Brüggolen M1251 vertrieben. Primäre Anwendungen liegen im Bereich der Viskositätseinstellung für Recyclat aus PA6 oder PA66, das in Extrusionsformmassen wiederverwertet wird. Bei dem Additiv Brüggolen M1251 handelt es sich um ein Masterbatch eines niedrigviskosen Polycarbonats, beispielsweise Lexan 141, in einem säureterminierten PA6. Für den Molekulargewichtsaufbau ist eine Reaktion der im aufzukondensierenden Material enthaltenen Aminoendgruppen mit dem Polycarbonat ursächlich.

Die Wirksamkeit der Methode wird in WO 00/66650 am Beispiel der Aufkondensierung von PA6 und PA66 gezeigt, wobei die entsprechenden Polykondensate teilweise in reiner Form eingesetzt werden, teilweise aber auch Zuschlagstoffe wie z. B. Glasfasern und Montanat enthalten.

Es hat sich allerdings überraschend herausgestellt, dass die in WO 00/66650 beschriebene Methode bei vielen Polyamiden, beispielsweise bei PA12, darauf basierenden Copolyamiden, PA11, PA612 oder alicyclischen Polyamiden nicht zu einer Molekulargewichtserhöhung führt. Eine hierfür notwendige Reaktion der Aminoendgruppen mit dem Additiv unterbleibt nachweislich. Es stellte sich daher die Aufgabe, auch für diese und ähnliche Polyamide, bei denen die Molekulargewichtserhöhung mit dem Verfahren gemäß WO 00/66650 nicht funktioniert, ein modifiziertes Verfahren zu finden, das eine sichere und einfache Molekulargewichtserhöhung der Materialien in einem Einschrittverfahren während der Compoundierung ermöglicht.

Überraschend wurde gefunden, dass die erwähnten Probleme dann auftreten, wenn bei der Herstellung des Polyamids eine protonensaure phosphorhaltige Verbindung als Katalysator eingesetzt wird, und dass in diesem Fall die Probleme beseitigt werden, wenn die zu einer schwachen Säure korrespondierende Base in Form eines Salzes zugesetzt wird, wobei vorteilhaft ein Salz einer schwachen Säure zugegeben wird.

Gegenstand der Erfindung ist daher ein Verfahren zur Aufkondensierung von Polyamiden bzw. Polyamidformmassen, die herstellungsbedingt 5 bis 500 ppm und insbesondere mindestens 20 ppm Phosphor in Form einer sauren Verbindung enthalten, mit einer Verbindung mit mindestens zwei Carbonateinheiten, wobei dem Polyamid bzw. der Polyamidformmasse 0,001 bis 10 Gew.-%, bezogen auf das Polyamid, eines Salzes einer schwachen Säure zugegeben wird.

Ein im Sinne der Erfindung geeignetes Polyamid ist auf Basis von Lactamen, Aminocarbonsäuren, Diaminen bzw. Dicarbonsäuren aufgebaut. Es kann darüber hinaus verzweigend wirkende Bausteine enthalten, die beispielsweise von Tricarbonsäuren, Triaminen oder Polyethylenimin abgeleitet sind. Geeignete Typen sind, jeweils als Homopolymer oder als Copolymer, beispielsweise PA6, PA46, PA66, PA610, PA66/6, PA6-T, PA66-T sowie insbesondere PA612, PA1012, PA11, PA12 oder ein transparentes Polyamid. Bei transparenten Polyamiden kommen beispielsweise in Frage:
- das Produkt aus einer Isomerenmischung von Trimethylhexamethylendiamin und Terephthalsäure,
- das Produkt aus Bis(4-aminocyclohexyl)methan und Decandisäure oder Dodecandisäure,
- das Produkt aus Bis(4-amino-3-methylcyclohexyl)methan und Decandisäure oder Dodecandisäure.

Weiterhin sind Polyetheramide auf der Basis von Lactamen, Aminocarbonsäuren, Diaminen, Dicarbonsäuren und Polyetherdiaminen und/oder Polyetherdiolen geeignet.

Bevorzugt haben die Ausgangsverbindungen Molekulargewichte Mₙ von größer als 5000, insbesondere von größer als 8000. Hierbei sind diejenigen Polyamide bevorzugt, deren Endgruppen zumindest teilweise als Aminogruppen vorliegen. Beispielsweise liegen mindestens 30 %, mindestens 40 %, mindestens 50 %, mindestens 60 %, mindestens 70 %, mindestens 80 % oder mindestens 90 % der Endgruppen als Aminoendgruppen vor.

Im erfindungsgemäßen Verfahren wird mindestens eine Verbindung mit mindestens zwei Carbonateinheiten in einem Mengenverhältnis von 0,005 bis 10 Gew.-% eingesetzt, berechnet im Verhältnis zum eingesetzten Polyamid. Vorzugsweise liegt dieses Verhältnis im Bereich von 0,01 bis 5,0 Gew.-%, besonders bevorzugt im Bereich von 0,05 bis 3 Gew.-%. Der Begriff "Carbonat" bedeutet hier Ester der Kohlensäure insbesondere mit Phenolen oder Alkoholen.

Die Verbindung mit mindestens zwei Carbonateinheiten kann niedermolekular, oligomer oder polymer sein. Sie kann vollständig aus Carbonateinheiten bestehen oder sie kann noch weitere Einheiten aufweisen. Diese sind vorzugsweise Oligo- oder Polyamid-, -ester-, -ether-, -etheresteramid- oder -esteramideinheiten. Solche Verbindungen können durch bekannte Oligo- oder Polymerisationsverfahren bzw. durch polymeranaloge Umsetzungen hergestellt werden.

Geeignete Verbindungen mit mindestens zwei Carbonateinheiten sind in der WO 00/66650, auf die hier ausdrücklich Bezug genommen wird, ausführlich beschrieben.

Bei der vorliegenden Erfindung enthält das Polyamid zwingend eine protonensaure phosphorhaltige Verbindung in Form eines aktiven Polykondensationskatalysators, der entweder in dieser stofflichen Form oder in Form von Vorstufen zugesetzt werden kann, die unter den Reaktionsbedingungen den aktiven Katalysator bilden, oder dessen Folgeprodukten. Die Bestimmung des Phosphorgehaltes erfolgt nach DIN EN ISO 11885 mittels ICP-OES (Inductively Coupled Plasma-Optical Emission Spectrometry), sie ist aber auch beispielsweise durch AAS (Atomabsorptionsspektroskopie) möglich. Zu beachten ist, dass in Formmassen zusätzlich auch andere phosphorhaltige Komponenten enthalten sein können, beispielsweise als Stabilisatoren. In diesem Fall erfolgt die Bestimmung des aus der Polykondensation stammenden Phosphors nach einer Differenzmethode. Die Probenvorbereitung wird dann auf die jeweilige Problemstellung abgestimmt.

Das Salz einer schwachen Säure zeigt vermutlich deshalb die erfindungsgemäße Wirk-samkeit, weil es die enthaltenen Phosphorverbindungen unschädlich macht. Dabei liegt der pKₐ-Wert der schwachen Säure bei 2,5 oder höher. Geeignete schwache Säuren sind beispielsweise ausgewählt aus Carbonsäuren wie Monocarbonsäuren, Dicarbonsäuren, Tricarbonsäuren, Hydroxycarbonsäuren bzw. Aminocarbonsäuren, Phenolen, Alkoholen und CH-aciden Verbindungen.

Daneben sind auch Salze anorganischer schwacher Säuren geeignet, beispielsweise Carbonate, Hydrogencarbonate, Phosphate, Hydrogenphosphate, Hydroxide, Sulfite, während geeignete Metalle beispielsweise Alkalimetalle, Erdalkalimetalle, Metalle der III. Hauptgruppe oder Metalle der II. Nebengruppe sein können. Als Kation sind prinzipiell auch organische Kationen geeignet, beispielsweise Ammoniumionen, die vollständig oder teilweise mit organischen Resten substituiert sind.

Darüber hinaus sind auch Salze schwacher Säuren einsetzbar, die Teil makromolekularer Strukturen sind, beispielsweise in Form von Ionomeren vom Typ Surlyn^{®} (DuPont) oder voll- bzw. teilverseiften Polyethylenwachsoxidaten.

Beispielhaft seien folgende Salze aufgeführt: Aluminiumstearat, Bariumstearat, Lithiumstearat, Magnesiumstearat, Kaliumoleat, Natriumoleat, Calciumlaurat, Calciummontanat, Natriummontanat, Kaliumacetat, Zinkstearat, Magnesiumstearat, Calciumhydroxid, Magnesiumhydroxid, Natriumphenolat-Trihydrat, Natriummethanolat, Calciumcarbonat, Natriumcarbonat, Natriumhydrogencarbonat, Trinatriumphosphat und Dinatriumhydrogenphosphat.

Im allgemeinen ist es vorteilhaft, die Verbindung mit mindestens zwei Carbonateinheiten vor der Compoundierung oder während der Compoundierung dem Polyamid zuzugeben und gründlich einzumischen. Die Zugabe erst nach der Compoundierung, aber vor der Verarbeitung ist zwar möglich, hierbei muss aber für eine gründliche Vermischung bei der Verarbeitung Sorge getragen werden.
Mit dem Zeitpunkt der Zugabe des Salzes einer schwachen Säure kann der Zeitpunkt des Molmassenaufbaus gesteuert werden. Es kann beispielsweise bereits nach Beendigung der Polykondensation in die Primärschmelze dosiert werden, etwa direkt in den Polykondensationsreaktor oder in den Ausfahrextruder. Es kann andererseits auch auf das Polyamidgranulat vor der Compoundierung aufgebracht werden, z. B. in einem Heißmischer oder einem Taumeltrockner. Eine andere Möglichkeit besteht darin, das Salz direkt während der Verarbeitung des Polyamids zur Formmasse zuzugeben, beispielsweise zusammen mit den übrigen Zuschlagsstoffen. In diesen Fällen findet der Molmassenaufbau bereits vor der Compoundierung oder während der Compoundierung statt. Andererseits kann es dann, wenn bei der Compoundierung Füll- oder Verstärkungsstoffe eingearbeitet werden sollen oder wenn mit der Formmasse eine Schmelzefiltration durchgeführt werden soll, vorteilhaft sein, das Salz einer schwachen Säure erst nach dem Compoundierungsschritt zuzugeben, beispielsweise indem es auf das Granulat einer Formmasse aufgebracht wird, in die das zugehörige Additiv mit mehr als zwei Carbonateinheiten bereits eingemischt ist, oder indem es als Masterbatch zugegeben wird, so dass eine Granulatmischung entsteht. Der erwünschte Molmassenaufbau findet dann während der Verarbeitung des so ausgerüsteten Granulats bzw. der Granulatmischung beim Verarbeiter statt, wobei Fertigteile wie z. B. Rohre hergestellt werden.

Vom Salz einer schwachen Säure werden bevorzugt 0,001 bis 5 Gew.-%, besonders bevorzugt 0,01 bis 2,5 Gew.-% und insbesondere bevorzugt 0,05 bis 1 Gew.-% eingesetzt, jeweils bezogen auf das Polyamid.

Im erfindungsgemäßen Verfahren können weiterhin die üblichen Zuschlagstoffe verwendet werden, die bei der Herstellung von Polyamidformmassen Verwendung finden. Illustrative Beispiele hierfür sind Färbemittel, Flammverzögerer und -schutzmittel, Stabilisatoren, Füllstoffe, Gleitfähigkeitsverbesserer, Formentrennmittel, Schlagzähmodifikatoren, Weichmacher, Kristallisationsbeschleuniger, Antistatika, Schmiermittel, Verarbeitungshilfsmittel sowie weitere Polymere, die mit Polyamiden üblicherweise compoundiert werden.

Beispiele dieser Zuschlagstoffe sind wie folgt:

Färbemittel: Titandioxid, Bleiweiß, Zinkweiß, Lithopone, Antimonweiß, Ruß, Eisenoxidschwarz, Manganschwarz, Kobaltschwarz, Antimonschwarz, Bleichromat, Mennige, Zinkgelb, Zinkgrün, Cadmiumrot, Kobaltblau, Berliner Blau, Ultramarin, Manganviolett, Cadmiumgelb, Schweinfurter Grün, Molybdänorange und -rot, Chromorange und -rot, Eisenoxidrot, Chromoxidgrün, Strontiumgelb, Molybdänblau, Kreide, Ocker, Umbra, Grünerde, Terra di Siena gebrannt, Graphit oder lösliche organische Farbstoffe.

Flammverzögerer und Flammschutzmittel: Antimontrioxid, Hexabromcyclododecan, Tetrachlor- oder Tetrabrombisphenol und halogenierte Phosphate, Borate, Chlorparaffine sowie roter Phosphor, ferner Stannate, Melamincyanurat und dessen Kondensationsprodukte wie Melam, Melem, Melon, Melaminverbindungen wie Melaminpyro- und -polyphosphat, Ammoniumpolyphosphat, Aluminiumhydroxid, Calciumhydroxid sowie phosphororganische Verbindungen, die keine Halogene enthalten wie beispielsweise Resorcinoldiphenylphosphat oder Phosphonsäureester.

Stabilisatoren: Metallsalze, insbesondere Kupfersalze und Molybdänsalze sowie Kupferkomplexe, Phosphite, sterisch gehinderte Phenole, sekundäre Amine, UV-Absorber und HALS-Stabilisatoren.

Füllstoffe: Glasfasern, Glaskugeln, Mahlglasfaser, Kieselgur, Talkum, Kaolin, Tone, CaF₂, Aluminiumoxide sowie Kohlefasern.

Gleitfähigkeitsverbesserer und Schmiermittel: MoS₂, Paraffine, Fettalkohole sowie Fettsäureamide.

Formentrennmittel und Verarbeitungshilfsstoffe: Wachse (Montanate), Montansäurewachse, Montanesterwachse, Polysiloxane, Polyvinylalkohol, SiO₂, Calciumsilikate sowie Perfluorpolyether.

Weichmacher: BBSA, POBO.
Schlagzähmodifikatoren: Polybutadien, EPM, EPDM, HDPE.

Antistatika: Ruß, Carbonfasern, Graphitfibrillen, mehrwertige Alkohole, Fettsäureester, Amine, Säureamide, quarternäre Ammoniumsalze.

Diese Zuschlagstoffe können in den üblichen, dem Fachmann bekannten Mengen verwendet werden.

Das erfindungsgemäß erhaltene hochmolekulare Polyamid bzw. die entsprechende Formmasse kann mit allen Methoden des Standes der Technik zu geformten Körpern oder Folien weiterverarbeitet werden, beispielsweise mittels Spritzgießen, Extrusion (z. B. zu Rohren), Coextrusion (z. B. zu Mehrschichtrohren oder Mehrschichtfolien), Blasformen, Saugblasformen, 3-D-Blasformen oder Thermoformen (beispielsweise von Folien). Hinsichtlich weiterer Einzelheiten soll auf die WO 00/66650 ausdrücklich Bezug genommen werden. Gegenstand der Erfindung ist insbesondere auch die Verwendung gemäß den Ansprüchen 9 bis 12.

Im Folgenden soll die Erfindung beispielhaft erläutert werden.

### Verfahrensbeschreibung:

Das entsprechende Basispolymer wurde zusammen mit den entsprechenden Additiven über den Einfüllstutzen einem Laborkneter (Haake Rheocord System 90) zugeführt. Das Versuchsmaterial wurde mittels Heizung und Friktionswärme auf die entsprechend eingestellte Schmelzetemperatur gebracht. Nach Erreichen dieser Temperatur wurde das Versuchsmaterial weitere 60 Sekunden bei dieser Temperatur vermengt. Anschließend wurde das noch heiße Material aus dem Laborkneter entfernt.

Mit diesem Material wurden folgende Analysen durchgeführt:
Lösungsviskosität ηᵣₑₗ gemäß DIN EN ISO 307;
Aminoendgruppen durch potentiometrische Titration mit Perchlorsäure;
Carboxylendgruppen durch visuelle Titration mit KOH und Phenolphthalein als Indikator.

Die Ergebnisse sind in den Tabellen 1 bis 3 dargestellt. B bedeutet hierbei Beispiel und VB Vergleichsbeispiel.

**Tabelle 1: Vergleichsbeispiele ausgehend von Polyamiden, die ohne Phosphorkatalysator hergestellt wurden**

| Einsatzstoff | Referenz | VB 1 | Referenz | VB 2 |
|---|---|---|---|---|
| PA12 | 100 | 99,4 | 0 | 0 |
| PA66 | 0 | 0 | 100 | 99 |
| Brüggolen M1251 | 0 | 0,6 | 0 | 1,0 |
| Schmelzetemp. [°C] | 240 | 240 | 290 | 290 |
| ηᵣₑₗ | 1,96 | 2,23 | 1,79 | 1,91 |
| NH₂ [mÄqu./kg] | 66 | 40,6 | 34,3 | 16,3 |
| COOH [mÄqu./kg] | 20 | 20 | 67 | 65 |

**Tabelle 2: Aktivierung von Brüggolen M1251 bei einem PA12, das mit HypophosphorigerSäure als Katalysator hergestellt wurde (Phorphorgehalt 25 ppm)**

| Einsatzstoff | Referenz | VB3 | B1 | B2 | B3 | B4 | B5 | B6 | VB4 | VB5 |
|---|---|---|---|---|---|---|---|---|---|---|
| PA12 | 100 | 99,4 | 99,3 | 99,3 | 99,3 | 99,3 | 99,3 | 99,3 | 99,3 | 99,3 |
| Brüggolen M1251 | 0 | 0,6 | 0,6 | 0,6 | 0,6 | 0,6 | 0,6 | 0,6 | 0,6 | 0,6 |
| Al-Stearat | 0 | 0 | 0,1 | 0 | 0 | 0 | 0 | 0 | 0 | 0 |
| Ca-Stearat | 0 | 0 | 0 | 0,1 | 0 | 0 | 0 | 0 | 0 | 0 |
| Li-Stearat | 0 | 0 | 0 | 0 | 0,1 | 0 | 0 | 0 | 0 | 0 |
| Na-Oleat | 0 | 0 | 0 | 0 | 0 | 0,1 | 0 | 0 | 0 | 0 |
| Ca-Laurat | 0 | 0 | 0 | 0 | 0 | 0 | 0,1 | 0 | 0 | 0 |
| Ca-Montanat | 0 | 0 | 0 | 0 | 0 | 0 | 0 | 0,1 | 0 | 0 |
| Stearinsäure | 0 | 0 | 0 | 0 | 0 | 0 | 0 | 0 | 0,1 | 0 |
| Fettsäureester | 0 | 0 | 0 | 0 | 0 | 0 | 0 | 0 | 0 | 0,1 |
| Schmelzetemp.[°C] | 240 | 240 | 240 | 240 | 240 | 240 | 240 | 240 | 240 | 240 |
| ηᵣₑₗ | 2,10 | 2,07 | 2,77 | 2,63 | 2,72 | 2,58 | 2,64 | 2,69 | 2,11 | 2,16 |
| NH₂ [mÄqu./kg) | 51,9 | 52,7 | 22 | 24,7 | 23,8 | 26,6 | 29,5 | 27,7 | 40,7 | 43,5 |
| COOH[mÄqu./kg) | 13 | 15 | 7 | 10 | 7 | 6 | 5 | 8 | 8 | 9 |

**Tabelle 3: Aktivierung von Brüggolen M1251 bei anderen Polyamiden, die mit Hypophosphoriger Säure als Katalysator hergestellt wurden (Phosphorgehalt jeweils 25 ppm)**

| Einsatzstoff | Referenz | VB6 | B7 | Referenz | VB7 | B8 |
|---|---|---|---|---|---|---|
| PA612 | 100 | 99,4 | 99,3 | 0 | 0 | 0 |
| PA PACM12 | 0 | 0 | 0 | 100 | 99,2 | 99,2 |
| Brüggolen M1251 | 0 | 0,6 | 0,6 | 0 | 0,8 | 0,8 |
| Ca-Stearat | 0 | 0 | 0,1 | 0 | 0 | 0,1 |
| Schmelzetemp. [°C] | 260 | 260 | 260 | 280 | 280 | 280 |
| ηᵣₑₗ | 1,85 | 1,83 | 2,00 | 1,85 | 1,85 | 1,96 |
| NH₂ [mÄqu./kg] | 96,8 | 97,3 | 79,8 | 40,2 | 41,7 | 18 |
| COOH[mÄqu./kg] | 5 | 9 | 7 | 70 | 69 | 69 |

## Patentansprüche

1. Verfahren zur Aufkondensierung von Polyamiden bzw. Polyamidformmassen mit 0,005 bis 10 Gew.-%, bezogen auf das Polyamid, eines Esters der Kohlensäure mit mindestens zwei Carbonateinheiten, **dadurch gekennzeichnet, dass**
a) das Polyamid herstellungsbedingt 5 bis 500 ppm Phosphor in Form einer sauren Verbindung enthält und
b) dem Polyamid bzw. der Polyamidformmasse 0,001 bis 10 Gew.-%, bezogen auf das Polyamid, eines Salzes einer schwachen Säure zugegeben wird.

2. Verfahren gemäß Anspruch 1,
**dadurch gekennzeichnet,**
**dass** das Polyamid mindestens 20 ppm Phosphor in Form einer sauren Verbindung enthält.

3. Verfahren gemäß einem der vorhergehenden Ansprüche,
**dadurch gekennzeichnet,**
**dass** dem Polyamid bzw. der Polyamidformmasse 0,001 bis 5 Gew.-% eines Salzes einer schwachen Säure zugegeben wird.

4. Verfahren gemäß einem der vorhergehenden Ansprüche,
**dadurch gekennzeichnet,**
**dass** dem Polyamid bzw. der Polyamidformmasse 0,01 bis 2,5 Gew.-% eines Salzes einer schwachen Säure zugegeben wird.

5. Verfahren gemäß einem der vorhergehenden Ansprüche,
**dadurch gekennzeichnet,**
**dass** dem Polyamid bzw. der Polyamidformmasse 0,05 bis 1 Gew.-% eines Salzes einer schwachen Säure zugegeben wird.

6. Verfahren gemäß einem der vorhergehenden Ansprüche,
**dadurch gekennzeichnet,**
**dass** die schwache Säure einen pKₐ-Wert von 2,5 oder höher besitzt.

7. Verfahren gemäß einem der vorhergehenden Ansprüche,
**dadurch gekennzeichnet,**
**dass** das Salz einer schwachen Säure ein Alkalimetallsalz, ein Erdalkalimetallsalz, das Salz eines Metalls der III. Hauptgruppe, das Salz eines Metalls der II. Nebengruppe oder ein Ammoniumsalz ist.

8. Verwendung des gemäß einem der vorhergehenden Ansprüche aufkondensierten Polyamids bzw. der entsprechenden Formmasse zur Herstellung geformter Körper oder Folien mittels Spritzgießen, Extrusion, Coextrusion, Blasformen, Saugblasformen, 3-D-Blasformen oder Thermoformen.

9. Verwendung gemäß Anspruch 8,
**dadurch gekennzeichnet,**
**dass** der geformte Körper oder die Folie einschichtig aufgebaut ist und aus einem gemäß der Ansprüche 1 bis 7 aufkondensierten Polyamid bzw. der entsprechenden Formmasse besteht.

10. Verwendung gemäß Anspruch 8,
**dadurch gekennzeichnet,**
**dass** der geformte Körper oder die Folie ein Mehrschichtverbund ist und ein gemäß der Ansprüche 1 bis 7 aufkondensiertes Polyamid bzw. die entsprechende Formmasse als Schicht enthält.

11. Verwendung gemäß einem der Ansprüche 8 bis 10,
**dadurch gekennzeichnet,**
**dass** der geformte Körper ein Rohr, ein Filament oder ein Behälter ist.

12. Verwendung gemäß einem der Ansprüche 8 bis 11,
**dadurch gekennzeichnet,**
**dass** der geformte Körper eine Kühlmittelleitung, ein Filler Neck als Teil eines Kraftstoffleitungssystems, ein Behälter oder ein Tank für ein Kraftfahrzeug ist.

## Claims

1. Process for condensing polyamides or polyamide molding compositions to increase their molecular weight, using from 0.005 to 10% by weight, based on the polyamide, of a carbonic ester having at least two carbonate units, **characterized in that**
a) the polyamide comprises from 5 to 500 ppm of phosphorus in the form of an acidic compound, as a result of its preparation, and
b) from 0.001 to 10% by weight, based on the polyamide, of a salt of a weak acid is added to the polyamide or polyamide molding composition.

2. Process according to Claim 1,
**characterized in that**
the polyamide comprises at least 20 ppm of phosphorus in the form of an acidic compound.

3. Process according to either of the preceding claims,
**characterized in that**
from 0.001 to 5% by weight of a salt of a weak acid is added to the polyamide or polyamide molding composition.

4. Process according to any of the preceding claims,
**characterized in that**
from 0.01 to 2.5% by weight of a salt of a weak acid is added to the polyamide or polyamide molding composition.

5. Process according to any of the preceding claims,
**characterized in that**
from 0.05 to 1% by weight of a salt of a weak acid is added to the polyamide or polyamide molding composition.

6. Process according to any of the preceding claims,
**characterized in that**
the weak acid has a pKₐ value of 2.5 or higher.

7. Process according to any of the preceding claims,
**characterized in that**
the salt of a weak acid is an alkali metal salt, an alkaline earth metal salt, the salt of a metal of main group III, the salt of a metal of transition group II, or an ammonium salt.

8. Use of the polyamide condensed according to any of the preceding claims to increase its molecular weight, or of the corresponding molding composition, to produce moldings or films by means of injection molding, extrusion, coextrusion, blow molding, suction blow molding, 3D blow molding, or thermoforming.

9. Use according to Claim 8,
**characterized in that**
the molding or the film has a single-layer structure and is composed of a polyamide condensed according to Claims 1 to 7 to increase its molecular weight, or of the corresponding molding composition.

10. Use according to Claim 8,
**characterized in that**
the molding or the film is a multilayer composite and comprises, as layer, a polyamide condensed according to Claims 1 to 7 to increase its molecular weight, or the corresponding molding composition.

11. Use according to any of Claims 8 to 10,
**characterized in that**
the molding is a tube, a filament or a container.

12. Use according to any of Claims 8 to 11,
**characterized in that**
the molding is a coolant line, a filler neck, this being part of a fuel line system, or is a container, or a tank for a motor vehicle.

## Revendications

1. Procédé de condensation de polyamides ou de masses de moulage de polyamides avec de 0,005 à 10% en poids, par rapport au polyamide, d'un ester de l'acide carbonique comportant au moins deux unités carbonate, **caractérisé en ce que**:
a) le polyamide contient, de par des conditions de préparation, de 5 à 500 ppm de phosphore sous forme d'un composé acide et
b) on ajoute au polyamide ou à la masse de moulage de polyamide de 0,001 à 10% en poids, par rapport au polyamide, d'un sel d'un acide faible.

2. Procédé suivant la revendication 1, **caractérisé en ce que** le polyamide contient au moins 20 ppm de phosphore sous forme d'un composé acide.

3. Procédé suivant l'une quelconque des revendications qui précèdent, **caractérisé en ce que** l'on ajoute au polyamide ou à la masse de moulage de polyamide de 0,001 à 5% en poids d'un sel d'un acide faible.

4. Procédé suivant l'une quelconque des revendications qui précèdent, **caractérisé en ce que** l'on ajoute au polyamide ou à la masse de moulage de polyamide de 0,01 à 2,5% en poids d'un sel d'un acide faible.

5. Procédé suivant l'une quelconque des revendications qui précèdent, **caractérisé en ce que** l'on ajoute au polyamide ou à la masse de moulage de polyamide de 0,05 à 1% en poids d'un sel d'un acide faible.

6. Procédé suivant l'une quelconque des revendications qui précèdent, **caractérisé en ce que** l'acide faible possède une valeur pKₐ de 2,5 ou plus.

7. Procédé suivant l'une quelconque des revendications qui précèdent, **caractérisé en ce que** le sel d'un acide faible est un sel de métal alcalin, un sel de métal alcalino-terreux, le sel d'un métal du IIIème groupe principal, le sel d'un métal du IIème sous-groupe ou un sel d'ammonium.

8. Utilisation du polyamide condensé suivant l'une quelconque des revendications qui précèdent, ou de la masse de moulage correspondante, pour la fabrication de corps moulés ou de feuilles par moulage par injection, extrusion, coextrusion, moulage par soufflage, moulage par soufflage - aspiration, moulage par soufflage 3D ou thermoformage.

9. Utilisation suivant la revendication 8, **caractérisée en ce que** le corps moulé ou la feuille est configuré(e) en une couche et est composé(e) d'un polyamide condensé suivant l'une quelconque des revendications 1 à 7, ou de la masse de moulage correspondante.

10. Utilisation suivant la revendication 8, **caractérisée en ce que** le corps moulé ou la feuille est un composite multicouche et contient en tant que couche un polyamide condensé suivant l'une quelconque des revendications 1 à 7, ou la masse de moulage correspondante.

11. Utilisation suivant l'une quelconque des revendications 8 à 10, **caractérisée en ce que** le corps moulé est un tube, un filament ou un récipient.

12. Utilisation suivant l'une quelconque des revendications 8 à 11, **caractérisée en ce que** le corps moulé est une conduite de liquide de refroidissement, un goulot de remplissage en tant que partie d'un système de canalisations de carburant, un récipient ou un réservoir pour automobile.
